# EUROPÄISCHE PATENTSCHRIFT

(11) **EP 3 854 732 B1**
(45) Veröffentlichungstag und Bekanntmachung des Hinweises auf die Patenterteilung: **17.04.2024**
(21) Anmeldenummer: 20152952.6
(22) Anmeldetag: 21.01.2020
(51) Int. Cl.: B65G 47/51, B65G 47/68

(54) **SPEICHERTISCH FÜR EINE VERPACKUNGSANLAGE, VERPACKUNGSANLAGE MIT EINEM SPEICHERTISCH SOWIE VERFAHREN ZUM BETREIBEN EINES SPEICHERTISCHES**
STORAGE TABLE FOR A PACKAGING INSTALLATION, PACKAGING INSTALLATION COMPRISING A STORAGE TABLE AND METHOD FOR OPERATING A STORAGE TABLE
TABLE D'ACCUMULATION POUR UNE INSTALLATION D'EMBALLAGE, INSTALLATION D'EMBALLAGE DOTÉE D'UNE TABLE D'ACCUMULATION ET PROCÉDÉ DE FONCTIONNEMENT D'UNE TABLE D'ACCUMULATION

(43) Veröffentlichungstag der Anmeldung: 28.07.2021
(73) Patentinhaber: Illinois Tool Works, Inc., Glenview, Illinois 60025 (US)
(72) Erfinder: GREWE, Guido, 48465 Schüttorf (DE)
(74) Vertreter: Meissner Bolte Partnerschaft mbB

(56) Entgegenhaltungen:
- EP-A1- 2 199 217
- WO-A1-2017/054942
- DE-T2- 60 200 953
- DE-U1-202005 013 125
- JP-A- H07 267 352

## Beschreibung

Die vorliegende Erfindung betrifft einen Speichertisch für eine Verpackungsanlage gemäß dem Oberbegriff des unabhängigen Patentanspruchs 1.

Demgemäß betrifft die Erfindung insbesondere einen Speichertisch für eine Verpackungsanlage, wobei der Speichertisch mindestens eine Einschleusung, mindestens eine Ausschleusung und mindestens zwei separat voneinander mit Verpackungen bestückbare und zwischen der mindestens einen Einschleusung und der mindestens einen Ausschleusung angeordnete Speicherlinien aufweist, wobei zum Transport der jeweiligen Verpackungen den mindestens zwei Speicherlinien jeweils eine Transportvorrichtung zugeordnet ist.

Die vorliegende Erfindung betrifft ferner ein Verfahren zum Betreiben eines Speichertisches gemäß dem nebengeordneten Patentanspruch 8 sowie eine Verpackungsanlage mit einem Speichertisch gemäß dem nebengeordneten Patentanspruch 7.

Die Druckschrift DE 602 00 953 T2 betrifft ein Verfahren und ein System gemäß dem Oberbegriffs des Anspruchs 1 zur automatischen und kontinuierlichen Herstellung von Schichten von Verkaufseinheiten vor der Palettierung.

Die Druckschrift EP 2 199 217 A1 betrifft eine Vorrichtung zum Zuführen von Verpackungseinheiten zu einer Verpackungsmaschine.

Die Druckschrift DE 20 2005 013 125 U1 betrifft eine Vorrichtung zum Umformen eines mehrspurigen Behälterstroms in mehrere einspurige Behälterreihen.

Die Druckschrift WO 2017/054942 A1 betrifft einen Speichertisch einer Verpackungsanlage mit zwei Einschleusungen sowie zwei Ausschleusungen und eine Vielzahl von separat voneinander bestückbaren, zwischen den Einschleusungen und den Ausschleusungen angeordneten Speicherlinien.

Die Druckschrift JP H07-267352 A betrifft ebenfalls einen Speichertisch.

Der vorliegend berücksichtigte Speichertisch ist insbesondere ein Speichertisch, in welchem Verpackungen ohne Druck, d.h. mit einem vorab festgelegten oder festlegbaren (geringen) Abstand zwischen einander, zwischengespeichert werden oder zwischenspeicherbar sind. Insbesondere betrifft somit die Erfindung keine so genannte "Niederdruck-Speichervorrichtung", wie sie beispielsweise insbesondere als Speichervorrichtung bzw. Verteileinheit in Flaschenabfüllanlagen verwendet werden. Bei derartigen Niederdruck-Speichervorrichtungen werden die Behälter (Flaschen) mit einem gewissen (niedrigen) Staudruck transportiert und zwischengespeichert.

Verpackungsanlagen zeichnen sich in der Regel durch eine Vielzahl von Verpackungsstationen (Verpackungseinrichtungen) aus, welche die Verpackungen in jeweils unterschiedlichen Arbeitsschritten weiterverarbeiten. So sind beispielsweise bei Abfüllanlagen für Getränkekartons im Anschluss an eine Füllmaschine beispielsweise zunächst ein Strohhalm-Applikator und anschließend ein Schrumpffolien-Applikator im Einsatz. Im Schrumpffolien-Applikator werden mehrere Verpackungen zu einem Gebinde zusammengefasst.

Bei der Auslegung einer Verpackungsanlage steht zunehmend die Verarbeitungsrate im Vordergrund, d.h. die Anzahl an Verpackungen je Zeiteinheit. Je höher die Verarbeitungsrate einer Verpackungsanlage ist, desto effizienter arbeitet die Verpackungsanlage. Demnach besteht ein grundsätzlicher Bedarf danach, die Verarbeitungsrate einer einzelnen Verpackungsstation bzw. Verpackungseinrichtung der Verpackungsanlage zu optimieren, um somit die Verarbeitungsrate der gesamten Verpackungsanlage zu erhöhen. Dabei ist es beim Betreiben einer Verpackungsanlage das Ziel, die jeweils langsamste Verpackungsstation (Verpackungseinrichtung) möglichst mit ihrer maximalen Verarbeitungsrate zu betreiben, um auf diese Weise den Durchsatz an Verpackungen der Verpackungsanlage möglichst zu maximieren.

Andererseits ist es im Betrieb der Verpackungsanlage nicht vermeidbar, dass es im Rahmen der Verarbeitung der Verpackungen an einzelnen Verpackungseinrichtungen auch zu Störungen kommen kann. Um einen möglichst störungsfreien Produktionsablauf aufrechterhalten zu können und/oder um Schwankungen in der Verarbeitungsrate von Verpackungseinrichtungen der Verpackungsanlage zu kompensieren, ist es allgemein üblich, dass zwischen zwei Verpackungseinrichtungen eine Speichervorrichtung insbesondere in Gestalt eines Speichertisches angeordnet wird.

Der Speichertisch nimmt Verpackungen auf, wenn stromabwärts des Speichertisches in der Verpackungsanlage eine Störung auftritt und die Verpackungen nicht mehr weiter stromabwärts verarbeitet werden können. Sobald die stromabwärtige Störung behoben ist, können die auf dem Speichertisch zwischengespeicherten Verpackungen von dem Speichertisch abgerufen und weiterverarbeitet werden.

Demnach ist es durch den Speichertisch möglich, die im Hinblick auf den Speichertisch stromaufwärtigen Verpackungseinrichtungen oder andere Einrichtungen für eine gewisse Zeitperiode weiter zu betreiben, zumindest so lange, bis der Speichertisch gefüllt ist, d.h. die Aufnahmekapazität des Speichertisches ausgeschöpft ist.

Demnach erfüllt die Verwendung eines Speichertisches die Ausfallsicherheit einer stromaufwärtigen Einrichtung bei einem Ausfall einer stromabwärtigen Einrichtung, da die stromaufwärtige Einrichtung stets noch zunächst den Speichertisch mit Verpackungen füllen kann, ehe auch sie abgeschaltet werden muss. Ist die Störung der stromabwärtigen Einrichtung vorher behoben, kann die stromaufwärtige Einrichtung ohne Unterbrechung ihren Betrieb fortsetzen.

Der vorliegenden Erfindung liegt die Erkenntnis zu Grunde, dass aufgrund von Schlupfeffekten im Einlauf bzw. bei der Einschleusung beim Einschleusen von Verpackungen in die Speicherlinien bzw. Speicherbahnen des Speichertisches die in die Speicherlinien bzw. Speicherbahnen des Speichertisches einlaufenden Verpackungsreihen einen relativ großen Abstand zum stromabwärtigen bzw. ausschleusseitigen Endbereich der entsprechenden Speicherlinie bzw. der entsprechenden Speicherbahn aufweisen müssen. Von daher ist es üblich, dass die Speicherlinien bzw. Speicherbahnen des Speichertisches so aufgefüllt werden, dass die in die entsprechende Speicherlinie bzw. Speicherbahn einlaufende Verpackungsreihe einen relativ großen Abstand zum stromabwärtigen bzw. ausschleusseitigen Ende der entsprechenden Speicherlinie bzw. Speicherbahn aufweist. Eine derartige Lücke am stromabwärtigen bzw. ausschleusseitigen Endbereich der Speicherlinie/Speicherbahn ist auf Grund von Schlupfeffekten im Einlauf erforderlich.

Beim Entleeren einer solchen Speicherlinie tritt dann jedoch das Problem auf, dass zwischen einer letzten Verpackung einer auslaufenden Verpackungsreihe und einer ersten Verpackung einer anderen auslaufenden Verpackungsreihe ein relativ großer Abstand (Lücke) vorliegt. Diese Lücke kann in den nachfolgenden Verpackungseinrichtungen bzw. Arbeitsschritten Probleme bereiten, insbesondere wenn die Verpackungen beispielsweise einem Trinkhalm-Applikator zugeführt werden.

Ausgehend von dieser Problemstellung liegt somit der Erfindung die Aufgabe zu Grunde, einen Speichertisch der eingangs genannten Art dahingehend weiterzubilden, dass beim Entleeren der einzelnen Speicherlinien keine Lücken zwischen der letzten Verpackung einer auslaufenden Verpackungsreihe und der ersten Verpackung einer zweiten auslaufenden Verpackungsreihe auftritt.

Insbesondere liegt der Erfindung somit die Aufgabe zu Grunde, einen Speichertisch für Verpackungsanlagen anzugeben, welcher einen zuverlässigen Betrieb der Verpackungsanlage sicherstellt.

Die der Erfindung zu Grunde liegende Aufgabe wird insbesondere durch einen Speichertisch gemäß dem unabhängigen Patentanspruch 1 gelöst, wobei vorteilhafte Weiterbildungen hiervon in den entsprechenden abhängigen Ansprüchen angegeben sind.

Demgemäß betrifft die Erfindung einen Speichertisch für eine Verpackungsanlage, wobei der Speichertisch mindestens eine Einschleusung, mindestens eine Ausschleusung und mindestens zwei separat voneinander mit Verpackungen bestückbare und zwischen der mindestens einen Einschleusung und der mindestens einen Ausschleusung angeordnete Speicherlinien aufweist, wobei zum Transport der jeweiligen Verpackungen den mindestens zwei Speicherlinien jeweils eine Transportvorrichtung zugeordnet ist. Dabei findet die Ausschleusung vorzugsweise im Winkel zu der mindestens einen Speicherlinie und noch bevorzugter senkrecht zu der mindestens einen Speicherlinie statt.

Die den Speicherlinien jeweils zugeordneten Transportvorrichtungen können insbesondere Transportbänder oder Transportgurte aufweisen. Selbstverständlich kommen hier aber auch andere Ausführungsformen in Frage. Wesentlich in diesem Zusammenhang ist jedoch, dass die jeweiligen den Speicherlinien des Speichertisches zugeordneten Transportvorrichtungen unabhängig voneinander ansteuerbar und betreibbar sind.

Erfindungsgemäß ist vorgesehen, dass in einem stromabwärtigen bzw. ausschleusseitigen Endbereich der mindestens zwei Speicherlinien mindestens eine berührungslos arbeitende und insbesondere optische Sensorik vorgesehen ist zum Erfassen einer An- oder Abwesenheit einer Verpackung jeweils im stromabwärtigen Endbereich der jeweiligen Speicherlinien.

Bei der mindestens einen berührungslos arbeitenden Sensorik handelt es sich beispielsweise um eine Kamera, eine quer zu den mindestens zwei Speicherlinien des Speichertisches angeordnete Kamerazeile, eine Fotozelle bzw. eine Reihe von Fotozellen, eine Fotodiode bzw. eine Reihe von Fotodioden und/oder um einen mit elektromagnetischen Wellen oder Ultraschall arbeitenden Präsenzmeldesensor. Wenn ein mit elektromagnetischen Wellen arbeitender Präsenzmeldesensor zum Einsatz kommt, kann dieser beispielsweise als HF-Präsenzmeldesensor, als Mikrowellen-Präsenzmeldesensor oder als ein auf dem Doppelradar-Prinzip basierender Präsenzmeldesensor sein. Selbstverständlich kommen hier aber auch andere Techniken für die mindestens eine Sensorik am stromabwärtigen bzw. ausschleusseitigen Endbereich der Speicherlinien des Speichertisches in Frage, wie beispielsweise ein Tiefensensor insbesondere in Gestalt einer TOF-Kamera, in Gestalt einer PMD-Kamera oder in Gestalt eines PMD-Sensors.

Erfindungsgemäß weist der Speichertisch zum Ansteuern der jeweiligen den mindestens zwei Speicherlinien jeweils zugeordneten Transportvorrichtungen eine Steuereinrichtung auf. Die Steuereinrichtung ist dabei ausgebildet, in Abhängigkeit eines Erfassungsergebnisses der mindestens einen Sensorik die den Speicherlinien jeweils zugeordneten Transportvorrichtungen entsprechend anzusteuern. Die Steuereinrichtung ist ausgebildet, beim Einschleusen von Verpackungen in eine der mindestens zwei Speicherlinien die dieser Speicherlinie zugeordnete Transportvorrichtung derart anzusteuern, dass mit der Transportvorrichtung die in die Speicherlinie eingeschleusten Verpackungen so lange bzw. so weit transportiert werden, bis die erste in die Speicherlinie eingeschleuste Verpackung einen vorab festgelegten oder festlegbaren Bereich in dem stromabwärtigen bzw. ausschleusseitigen Endbereich dieser Speicherlinie erreicht hat.

Mit anderen Worten, mit der erfindungsgemäßen Lösung ist es möglich, die in eine Speicherlinie einlaufende Verpackungsreihe unmittelbar vor dem stromabwärtigen bzw. ausschleusseitigen Ende der Speicherlinie zu stoppen. Auf diese Weise wird wirksam verhindert, dass beim Entleeren der einzelnen Speicherlinien eine Lücke zwischen den Verpackungsreihen zweier Speicherlinien entsteht.

Den jeweiligen Speicherlinien ist am stromaufwärtigen Endbereich bzw. einschleusseitigen Endbereich eine geeignete Sensorik, beispielsweise in Gestalt eines mechanischen Schalters oder in Gestalt einer Lichtschranke vorgesehen, mit welcher erkannt wird, wenn über die Einschleusung der entsprechenden Speicherlinie Verpackungen zugeführt werden. Mit anderen Worten, die am einschleusseitigen Endbereich der entsprechenden Speicherlinie vorgesehene Sensorik erfasst vorzugsweise automatisch einen Zustand, wenn über die Einschleusung der entsprechenden Speicherlinie Verpackungen zugeführt werden. Die Steuereinrichtung steuert in diesem Fall vorzugsweise automatisch die der entsprechenden Speicherlinie zugeordnete Transportvorrichtung an, und zwar so lange, bis die am stromabwärtigen bzw. ausschleusseitigen Endbereich der Speicherlinie vorgesehene Sensorik erfasst, dass die erste Verpackung der der Speicherlinie zugeführten Verpackungsreihe den stromabwärtigen bzw. ausschleusseitigen Endbereich der Speicherlinie erreicht hat. Dann wird mit Hilfe der Steuereinrichtung die Transportvorrichtung derart angesteuert, dass ein Weitertransport der Verpackungen in dieser Speicherlinie angehalten wird.

Der vorab festgelegte oder festlegbare Bereich, bis zu welchem die erste in die Speicherlinie eingeschleuste Verpackung einer Verpackungsreihe mit Hilfe der der Speicherlinie zugeordneten Transportvorrichtung transportiert wird, ist derart gewählt bzw. wählbar, dass die erste Verpackung in der mindestens einen Ausschleusung des Speichertisches von einer Entnahmeeinrichtung der Ausschleusung so abnehmbar ist, dass ein insbesondere maximaler Abstand zwischen der mit Hilfe der Entnahmeeinrichtung von der Speicherlinie abgenommenen ersten Verpackung und einer zuvor mit Hilfe der Entnahmeeinrichtung von einer anderen Speicherlinie des Speichertisches abgenommenen Verpackung vorzugsweise genau einstellbar ist und vorzugsweise maximal 10 cm und noch bevorzugter maximal 5 cm beträgt.

Insbesondere ist eine minimal gewünschte Lücke zwischen zwei aneinandergrenzenden Verpackungen einstellbar, damit beim Anfahren der Speicherlinie die erforderliche Geschwindigkeit im Augenblick des Aufschließens auf die vorhergehende Reihe erreicht ist.

Wenn stromabwärtig des Speichertisches alle Verpackungseinrichtungen einwandfrei arbeiten, kann der erfindungsgemäße Speichertisch die Verpackungen ohne Verzögerung weiterleiten, und zwar indem die Verpackungen über eine dezidierte Speicherlinie des Speichertisches zunächst ohne Verzögerung von der Einschleusung zur Ausschleusung transportiert werden. Diese dezidierte Speicherlinie kann auch als "Bypass-Speicherlinie" verstanden werden, die im Regelfall die Verpackungen jeweils nur von der Einschleusung zur Ausschleusung transportiert.

Tritt hingegen im Hinblick auf den Speichertisch ein stromabwärtiger Fehler auf, wird die bevorzugt unmittelbar vor dem Fehler bzw. die bevorzugt unmittelbar vor der fehlerhaften Verpackungseinrichtung vorgesehene Ausschleusung des Speichertisches angewiesen, keine weiteren Verpackungen von dem Speichertisch zu entnehmen. Daraufhin füllt sich zunächst die erste der Ausschleusung zugeordnete Speicherlinie (Bypass-Speicherlinie) des Speichertisches, bis diese einen maximalen Füllgrad erreicht hat. Das Füllen dieser ersten Speicherlinie des Speichertisches wird mit Hilfe der am stromabwärtigen bzw. ausschleusseitigen Endbereich vorgesehenen berührungslos arbeitenden Sensorik gesteuert.

Im Einzelnen wird die erste Speicherlinie des Speichertisches so lange befüllt, bis in der ersten Speicherlinie die erste, stromabwärtige Verpackung den vorab festgelegten oder festlegbaren Bereich am stromabwärtigen bzw. ausschleusseitigen Endbereich der Speicherlinie erreicht. Dann wird von der Einschleusung des Speichertisches der Speichertisch entlang weiterer Speicherlinien sukzessiv gefüllt.

Hierbei werden zunächst mit Hilfe der Einschleusung die zwischenzuspeichernden Verpackungen einer zweiten Speicherlinie des Speichertisches zugeführt, und zwar derart, dass eine erste, stromabwärtige Verpackung dieser Verpackungsreihe den mit der am stromabwärtigen bzw. ausschleusseitigen Endbereich vorgesehenen Sensorik überwachten Bereich erreicht hat. Dann erfolgt die Befüllung einer nächsten (weiteren) Speicherlinie.

Dieser Vorgang wird entweder so lange durchgeführt, bis der Speichertisch insgesamt einen maximalen Füllgrad erreicht hat, oder der Fehler behoben ist und der Speichertisch danach entleert werden kann. Ist bis zum Zeitpunkt des Erreichens des maximalen Füllgrads des Speichertisches der Fehler in der stromabwärtigen Verpackungseinrichtung nicht behoben, wird zumindest die unmittelbar stromaufwärtige Verpackungseinrichtung, mithin jedoch gegebenenfalls auch die gesamte Verpackungsanlage angehalten. Insbesondere werden alle dem jeweiligen Speichertisch unmittelbar zugeordneten Verpackungseinrichtungen angehalten, d.h. alle die Verpackungseinrichtungen, die unmittelbar Verpackungen der mindestens einen Einschleusung dem Speichertisch zuführen oder von der mindestens einen Ausschleusung des Speichertisches beziehen.

Wird der Fehler stromabwärtig behoben, nimmt die stromabwärtige Verpackungseinrichtung ihren Betrieb wieder auf. Dadurch kann der Speichertisch sukzessiv wieder geleert werden, und zwar indem die Ausschleusung von den zuvor gefüllten Speicherlinien die Verpackungen aufnimmt und der stromabwärtigen Verpackungseinrichtung zuführt, bis der Speichertisch geleert ist.

Das Zu- und Abführen der Verpackungen zum und vom Speichertisch erfolgt vorzugsweise mit Fördereinrichtungen. Solche Fördereinrichtungen sind vorzugsweise an der Einschleusung und an der Ausschleusung des Speichertisches angeordnet. Vorzugsweise ist der Einschleusung und der Ausschleusung jeweils eine entsprechende Transportvorrichtung zugeordnet, um die mit der Fördereinrichtung der Einschleusung zugeführten Verpackungen dem Speichertisch bzw. den einzelnen Speicherlinien des Speichertisches zuzuführen bzw. um Verpackungen aus den Speicherlinien bei der Ausschleusung der entsprechenden Fördereinrichtung (Auslaufförderer) zuzuführen. Mit Hilfe der Fördereinrichtungen und der der Einschleusung bzw. Ausschleusung zugeordneten Transportvorrichtungen ist eine kontinuierliche Verarbeitung von Verpackungen in Verpackungseinrichtungen entlang der Verpackungsanlage möglich, ohne dass ein manueller Eingriff notwendig wird.

Zum Transport der jeweiligen Verpackungen im Speichertisch sind entlang der jeweiligen Speicherlinien jeweils Transportvorrichtungen vorgesehen. Die Transportvorrichtungen sind dazu eingerichtet, die Verpackungen in einer Speicherlinie aufzunehmen und diese bis zum stromabwärtigen bzw. ausschleusseitigen Endbereich der Speicherlinie zu transportieren.

Von der Einschleusung aus müssen die Verpackungen einer jeweiligen Speicherlinie des Speichertisches zugeführt werden. Auf dem Speichertisch sind die Speicherlinien vorzugsweise nebeneinander angeordnet.

Wie bereits erwähnt, ist der Einschleusung eine Transportvorrichtung zugeordnet, um von der Ausschleusung aus die Verpackungen in der Regel in einer Linearbewegung der entsprechenden Speicherlinie des Speichertisches zuzuführen. Um die zugeführten Verpackungen dann jedoch auf die einzelnen Speicherlinien aufteilen zu können, ist es notwendig, die Bewegungsrichtung der Verpackungen zu variieren, insbesondere von der Transportvorrichtung der Einschleusung zu der jeweiligen Speicherlinie, welche aktuell benutzt wird. Hierzu kann die Einschleusung eine Bestückungseinrichtung aufweisen, bei welcher es sich insbesondere um einen so genannten Satelliten oder Umlenker handelt, und welche dafür sorgt, dass die von der der Einschleusung mit Hilfe der Fördereinrichtung zugeführten Verpackungen der jeweils richtigen Speicherlinie zugeführt werden.

Die der Einschleusung zugeordnete Transportvorrichtung und/oder die der Ausschleusung zugeordnete Transportvorrichtung bestehen/besteht vorzugsweise aus beidseitigen vertikalen Kunststoffgliederketten mit aufgebrachten Gummilamellen, um die Verpackungen schonend zu transportieren.

Gemäß Ausführungsbeispielen wird vorgeschlagen, dass die Ausschleusung eine Entnahmeeinrichtung aufweist, welche ausgebildet ist, bedarfsweise von einer der mindestens zwei Speicherlinien Verpackungen abzunehmen und diese Verpackungen einem Transportband, insbesondere einem Transportband eines Auslaufförderers, zuzuführen, wobei hierzu der Entnahmeeinrichtung vorzugsweise ebenfalls eine Transportvorrichtung zugeordnet ist.

Die Entnahmeeinrichtung wird entsprechend einer erfindungsgemäßen Option als linear betriebener Satellit gebildet, der quer, vorzugsweise senkrecht, zu den Speicherlinien bewegbar ist und von den einzelnen Speicherlinien die Verpackungen der ausschleusseitigen Fördereinrichtung zuführt.

Vorzugsweise ist auf dem Speichertisch eine Mehrzahl nebeneinander angeordneter Speicherlinien vorgesehen. Je mehr Speicherlinien nebeneinander angeordnet sind, desto größer ist die Speicherkapazität des Speichertisches und die Ausfallwahrscheinlichkeit der Verpackungsanlage wird reduziert. Der Speichertisch kann sowohl ein horizontaler als auch ein vertikaler Speichertisch sein.

Die Erfindung betrifft ferner eine Verpackungsanlage gemäß Anspruch 7 mit mindestens einem Speichertisch der zuvor genannten erfindungsgemäßen Art sowie mit einer ersten und optional mit einer zweiten Verpackungseinrichtung. Die erste Verpackungseinrichtung ist ausgebildet, einer ersten Fördereinrichtung Verpackungen zuzuführen, wobei die Einschleusung des Speichertisches ausgebildet ist, die Verpackungen von der ersten Fördereinrichtung mindestens einer Speicherlinie des Speichertisches zuzuführen, und wobei die Ausschleusung des Speichertisches ausgebildet ist, die Verpackungen von der mindestens einen Speicherlinie des Speichertisches zu entnehmen und einer zweiten Fördereinrichtung zuzuführen. Die zweite Fördereinrichtung ist ausgebildet, die von der mindestens einen Speicherlinie entnommenen Verpackungen der optional vorgesehenen zweiten Verpackungseinrichtung zuzuführen.

Dabei ist insbesondere vorgesehen, dass die in dem stromabwärtigen bzw. ausschleusseitigen Endbereich der mindestens einen Speicherlinie des Speichertisches vorgesehene berührungslos arbeitende Sensorik ausgebildet ist, über die Steuereinrichtung die der mindestens einen Speicherlinie zugeordnete Transportvorrichtung derart anzusteuern, dass mit Hilfe der der mindestens einen Speicherlinie zugeordneten Transportvorrichtung die der mindestens einen Speicherlinie zugeführten Verpackungen so weit bis zum stromabwärtigen bzw. ausschleusseitigen Endbereich der mindestens einen Speicherlinie zu transportieren, dass beim Entnehmen der Verpackungen von der mindestens einen Speicherlinie keine Lücke zwischen der ersten von der mindestens einen Speicherlinie entnommenen Verpackung und einer zuvor von der Ausschleusung entnommenen und unmittelbar stromabwärts der ersten von der mindestens einen Speicherlinie entnommenen Verpackung benachbarten Verpackung vorliegt.

Unter dem hierin verwendeten Begriff "Lücke" ist ein Abstand zwischen zwei benachbarten Verpackungen zu verstehen, der größer ist als ein vorab festgelegter maximaler Abstand zwischen den Verpackungen einer in einer Speicherlinie eingespeisten Verpackungsreihe.

Die Erfindung betrifft ferner ein Verfahren gemäß Anspruch 8 zum Betreiben eines Speichertisches, insbesondere eines Speichertisches der zuvor beschriebenen erfindungsgemäßen Art, wobei mit Hilfe einer Einschleusung mindestens eine Speicherlinie des Speichertisches mit Verpackungen derart bestückt wird, dass mit Hilfe einer der mindestens einen Speicherlinie zugeordneten Transportvorrichtung eine erste, stromabwärtige Verpackung bis zu einem vorab festgelegten oder festlegbaren Bereich am stromabwärtigen Ende der mindestens einen Speicherlinie transportiert wird. Dabei ist insbesondere vorgesehen, dass der Transport der Verpackungen in der mindestens einen Speicherlinie mit Hilfe einer am stromabwärtigen Endbereich der Speicherlinie vorgesehenen berührungslos arbeitenden Sensorik gesteuert wird.

Nachfolgend werden unter Bezug auf die beiliegenden Zeichnungen exemplarische Ausführungsformen der Erfindung näher beschrieben.

Es zeigen:
- FIG. 1: schematisch eine exemplarische Ausführungsform der erfindungsgemäßen Verpackungsanlage;
- FIG. 2a-c: jeweils schematisch und in einer isometrischen Ansicht der ausschleusseitige Endbereich einer exemplarischen Ausführungsform des erfindungsgemäßen Speichertisches in einem Zustand, in welchem die Speicherlinien des Speichertisches mit Verpackungen bestückt und die Speicherlinien sukzessiv entleert werden.

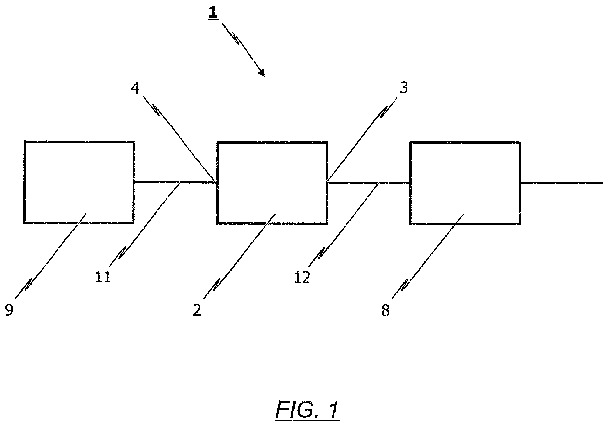

In FIG. 1 ist schematisch eine Verpackungsanlage 1 mit einer ersten Verpackungseinrichtung 8 beispielsweise in Gestalt einer Füllmaschine, einem Speichertisch 2 und einer zweiten Verpackungseinrichtung 9, beispielsweise einem Strohhalm-Applikator, dargestellt. Die erste Verpackungseinrichtung 8 (Füllmaschine) weist eine Ausschleusung auf, aus welcher Verpackungen 6, beispielsweise Getränkekartons oder dergleichen, vorzugsweise im verschlossenen Zustand, auf ein Transportband oder einen Transportgürtel (erste Fördereinrichtung 10) gegeben werden. Über diese Fördereinrichtung 10 werden die Verpackungen 6 einer Einschleusung 3 des Speichertisches 2 zugeführt.

Ausgangsseitig des Speichertisches 2 ist eine Ausschleusung 4 vorgesehen, über die die auf dem Speichertisch 2 zwischengespeicherten Verpackungen 6 auf eine zweite Fördereinrichtung 11 (Auslaufförderer) ausgeschleust werden.

An der Ausschleusung 4 ist als zweite Fördereinrichtung 11 (Auslaufförderer) ein zweites Transportband vorgesehen, welches die Verpackungen 6 der zweiten Verpackungseinrichtung 9 (beispielsweise einem Strohhalm-Applikator) zuführen. Eingangsseitig der zweiten Verpackungseinrichtung 9 ist eine Einschleusung vorgesehen. Ausgangsseitig der zweiten Verpackungseinrichtung 9 ist eine Ausschleusung vorgesehen. Die in der zweiten Verpackungseinrichtung 9 beispielsweise mit einem Strohhalm applizierten Verpackungen 6 werden an der Ausschleusung von der zweiten Verpackungseinrichtung 9 (Strohhalm-Applikator) ausgegeben.

Es bedarf keiner näheren Ausführung, dass die in FIG. 1 schematisch gezeigte Verpackungsanlage 1 rein beispielhaft ist und die Reihenfolge und Anordnung von den Verpackungseinrichtungen 8, 9 und dem Speichertisch 2 variiert werden können. Insbesondere sind gemäß Ausführungsbeispiele eine Füllmaschine, ein Strohhalm-Applikator, ein Schrumpffolien-Applikator oder dergleichen allesamt als Verpackungseinrichtungen einer Verpackungsanlage 1 zu verstehen.

Der in FIG. 1 nur schematisch gezeigte Speichertisch 2 dient zur Zwischenspeicherung von durch die erste Verpackungseinrichtung 8 zur Verfügung gestellten Verpackungen 6. Der Strom der Verpackungen 6 ist stromabwärtig gesehen ausgehend von der ersten Verpackungseinrichtung 8 über die erste Fördereinrichtung 10, den Speichertisch 2, die zweite Fördereinrichtung 11 zur zweiten Verpackungseinrichtung 9.

Tritt stromabwärtig des Speichertisches 2 eine Störung auf, beispielsweise im Bereich der zweiten Verpackungseinrichtung 9, sollten die Verpackungen 6 nicht mehr der zweiten Verpackungseinrichtung 9 zugeführt werden. Um zu verhindern, dass die erste Verpackungseinrichtung 8 (beispielsweise Füllmaschine) heruntergefahren werden muss, ist der Speichertisch 2 vorgesehen. Über die dem Speichertisch 2 zugeordnete Einschleusung 3 können Verpackungen 6 auf den Speichertisch 2 eingeschleust werden, während an der dem Speichertisch 2 zugeordneten Ausschleusung 4 keine weiteren Verpackungen 6 mehr ausgegeben werden.

Dies ist so lange möglich, bis die Speicherkapazität des Speichertisches 2 erreicht ist. Während dieser Zeit aber kann die erste Verpackungseinrichtung 8 (beispielsweise Füllmaschine) weiterhin Verpackungen 6 ausgeben. Die Zeit, die durch den Speichertisch 2 zur Verfügung gestellt wird, kann zur Behebung des Fehlers an der im Hinblick auf den Speichertisch 2 stromabwärtigen Verpackungseinrichtung 9 genutzt werden. Sobald der Fehler behoben und die mindestens eine stromabwärtige Verpackungseinrichtung 9 wieder funktionsfähig ist, können Verpackungen 6 über die dem Speichertisch 2 zugeordnete Ausschleusung 4 und der zweiten Fördereinrichtung 11 der zweiten Verpackungseinrichtung 9 wieder zugeführt werden.

Obgleich in den Zeichnungen nicht dargestellt, weist die Einschleusung 3 des Speichertisches 2 eine Bestückungseinrichtung vorzugsweise mit einer der Bestückungseinrichtung zugeordneten Transportvorrichtung auf, wobei die Bestückungseinrichtung ausgebildet ist, bedarfsweise jeweils einer der Speicherlinien 5a-h des Speichertisches 2 Verpackungen 6 von der ersten Verpackungseinrichtung 8 bzw. der ersten Fördereinrichtung 10 zuzuführen. Dabei kann die Bestückungseinrichtung als linear betriebener Satellit und/oder Umlenker ausgebildet sein, wobei der Satellit bzw. Umlenker quer und vorzugsweise senkrecht zu den Speicherlinien 5a-h des Speichertisches 2 bewegbar ist, um so sukzessiv die einzelnen Speicherlinien 5a-h des Speichertisches 2 aufzufüllen.

Bei dem in den Zeichnungen gezeigten Speichertisch 2 handelt es sich insbesondere um einen Speichertisch 2, bei welchem eine Ausschleusung 4 am stromabwärtigen Endbereich der Speicherlinien 5a-h und eine Einschleusung 3 am gegenüberliegenden Endbereich der Speicherlinien 5a-h angeordnet ist. Die bei der Einschleusung 3 des Speichertisches 2 vorgesehen Bestückungseinrichtung ist ausgebildet, nach Erreichen eines definierten Füllgrads einer der Speicherlinien 5a-h eine nächste Speicherlinie 5a-h des Speichertisches 2 zu bestücken.

Andererseits sind die einzelnen Speicherlinien 5a-h des in den Zeichnungen gezeigten Speichertisches 2 jeweils mit einer entsprechend zugeordneten Transportvorrichtung versehen, um die Verpackungen 6 in den einzelnen Speicherlinien 5a-h in Transportrichtung zu transportieren. Die den einzelnen Speicherlinien 5a-h jeweils zugeordneten Transportvorrichtungen können als Transportbänder oder Transportgurte ausgeführt sein.

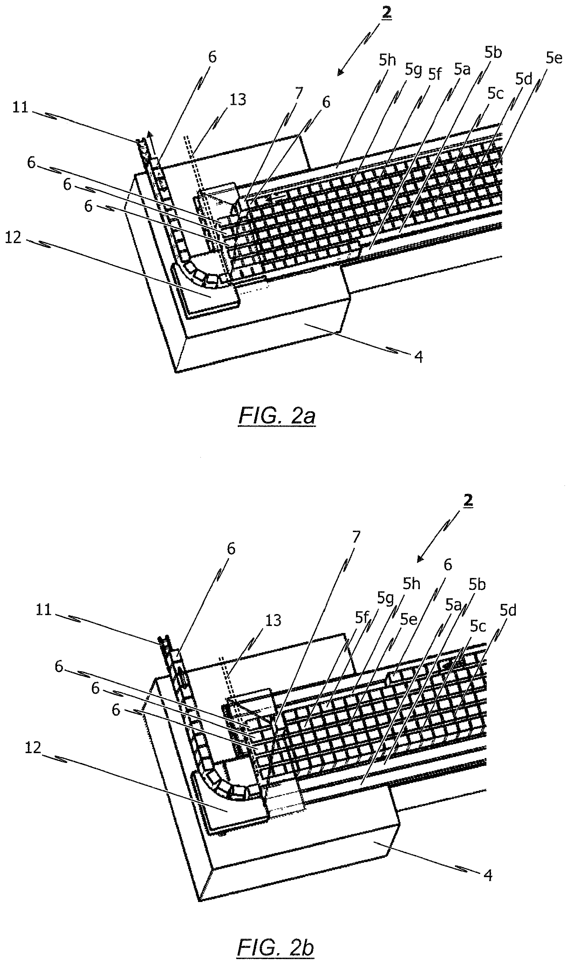

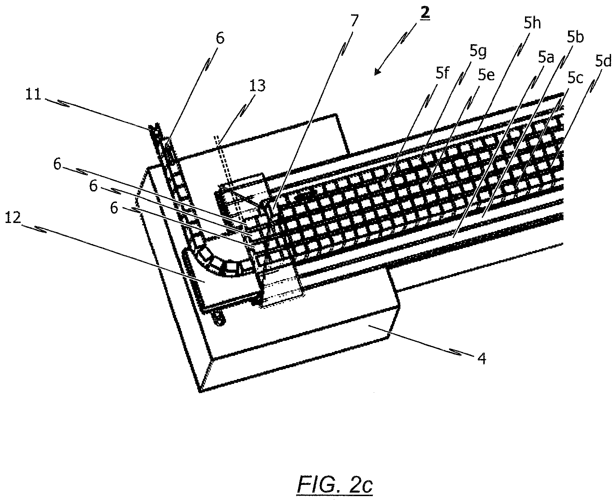

Wie es den schematischen Darstellungen in FIG. 2a bis FIG. 2c entnommen werden kann, weist die Ausschleusung 4 des Speichertisches 2 eine Entnahmeeinrichtung 12 in Gestalt eines linear betriebenen Umlenk-Satelliten auf, welcher quer und insbesondere senkrecht zu den Speicherlinien 5a-h des Speichertisches 2 bewegbar ist.

Vorzugsweise ist der Entnahmeeinrichtung 12 der Ausschleusung 4, hier also dem Umlenk-Satelliten, eine Transportvorrichtung zugeordnet, um die aus einer Speicherlinie 5a-h des Speichertisches 2 abgenommenen Verpackungen 6 der zweiten Fördereinrichtung 11 (beispielsweise einem Auslaufförderer) zuzuführen.

Obgleich bei den in den Zeichnungen gezeigten Ausführungsformen die Entnahmeeinrichtung 12 gemäß einer ersten Option der Erfindung als linear betriebener Umlenk-Satellit ausgeführt ist, der quer und insbesondere senkrecht zu den Speicherlinien 5a-h des Speichertisches 2 bewegbar ist, kann gemäß einer zweiten Option der Erfindung ein schwenkbar betriebenes Band vorgesehen werden, welches ausgehend von der zweiten Fördereinrichtung 11 zwischen den Speicherlinien 5a-h des Speichertisches 2 verschwenkbar ist.

Gleiches gilt im übertragenen Sinne auch für die in den Zeichnungen nicht gezeigte Bestückungseinrichtung bei der Einschleusung 3 des Speichertisches 2.

Wie es insbesondere den Darstellungen in FIG. 2a bis FIG. 2c entnommen werden kann, ist bei dem erfindungsgemäßen Speichertisch 2 in einem stromabwärtigen bzw. ausschleusseitigen Endbereich der Speicherlinien 5a-h des Speichertisches 2 mindestens eine berührungslos arbeitende und insbesondere optische Sensorik 7 vorgesehen, mit welcher jeweils im stromabwärtigen Endbereich der jeweiligen Speicherlinien 5a-h des Speichertisches 2 eine An- oder Abwesenheit einer Verpackung 6 erfassbar ist.

Des Weiteren weist der erfindungsgemäße Speichertisch 2 eine in den Zeichnungen nicht explizit gezeigte Steuereinrichtung auf, welche ausgebildet ist, die den Speicherlinien 5a-h des Speichertisches 2 jeweils zugeordneten Transportvorrichtungen geeignet anzusteuern. Die Ansteuerung der den Speicherlinien 5a-h des Speichertisches 2 zugeordneten Transportvorrichtungen erfolgt dabei insbesondere in Abhängigkeit eines Erfassungsergebnisses der mindestens einen Sensorik 7 beim stromabwärtigen bzw. ausschleusseitigen Endbereich der entsprechenden Speicherlinie 5a-h.

Die am stromabwärtigen bzw. ausschleusseitigen Endbereich der Speicherlinien 5a-h angeordnete, berührungslos arbeitende Sensorik 7 kann gemäß Ausführungsformen eine Kamera, eine quer und insbesondere senkrecht zu den Speicherlinien 5a-h angeordnete Kamerazeile, eine Fotozelle bzw. Fotozellenzeile, eine Fotodiode bzw. Fotodiodenzeile und/oder einen mit elektromagnetischen Wellen oder Ultraschall arbeitenden Präsenzmeldesensor bzw. eine entsprechende Präsenzmeldesensorreihe aufweisen.

Erfindungsgemäß ist die in den Zeichnungen nicht explizit gezeigte Steuereinrichtung des Speichertisches 2 ausgebildet, beim Einschleusen einer Verpackungsreihe in eine der vorzugsweise parallel verlaufenden Speicherlinien 5a-h des Speichertisches 2 die dieser Speicherlinie 5a-h zugeordnete Transportvorrichtung derart anzusteuern, dass mit der Transportvorrichtung die in die Speicherlinie 5a-h eingeschleusten Verpackungen 6 so lange bzw. so weit transportiert werden, bis die erste Verpackung der in die Speicherlinie 5a-h eingeschleuste Verpackungsreihe einen vorab festgelegten oder festlegbaren Bereich 13 in dem stromabwärtigen Endbereich dieser Speicherlinie 5a-h erreicht hat.

Der vorab festgelegte oder festlegbare Bereich 13, bis zu welchem die erste Verpackung der in die Speicherlinie 5a-h eingeschleusten Verpackungsreihe mit Hilfe der der Speicherlinie 5a-h zugeordneten Transportvorrichtung transportiert wird, ist insbesondere derart gewählt, dass die erste Verpackung der in die Speicherlinie 5a-h eingeschleusten Verpackungsreihe in der Ausschleusung 4 des Speichertisches 2 von der Entnahmeeinrichtung 12 (hier: von dem Umlenk-Satelliten) so abnehmbar ist, dass ein insbesondere maximaler Abstand zwischen der mit Hilfe des Umlenk-Satelliten von der Speicherlinie 5a-h abgenommenen ersten Verpackung 6 und einer zuvor mit Hilfe des Umlenk-Satelliten von einer anderen Speicherlinie 5a-h des Speichertisches 2 abgenommenen Verpackung 6 einstellbar ist.

Der Abstand ist insbesondere so gewählt, dass zwischen diesen beiden Verpackungen 6 keine Lücke vorliegt, um so einen einwandfreien Betrieb der stromabwärts des Speichertisches 2 vorgesehenen Verpackungseinrichtung 9 zu gewährleisten.

Im Einzelnen ist gemäß Ausführungsformen der vorliegenden Erfindung vorgesehen, dass die beim stromabwärtigen bzw. ausschleusseitigen Endbereich der Speicherlinien 5a-h vorgesehene Sensorik 7 ein entsprechendes Signal an die Steuereinrichtung des Speichertisches 2 abgibt, um eine in eine der Speicherlinien 5a-h einlaufende Verpackungsreihe erst unmittelbar vor der Ausschleusung 4 und insbesondere unabhängig von irgendwelchen Schlupfeffekten im Einlauf bzw. bei der Einschleusung 3 der Verpackungsreihe in die Speicherlinie 5a-h zu stoppen.

Wenn hingegen beim sukzessiven Entleeren der einzelnen Speicherlinien 5a-h des Speichertisches 2 die letzte Verpackung 6 der aus einer Speicherlinie 5a-h des Speichertisches 2 auslaufenden Verpackungsreihe in die als Umlenk-Satelliten ausgeführte Entnahmeeinrichtung 12 eingefördert ist, wird die dem Umlenk-Satelliten zugeordnete Transportvorrichtung angehalten und die als Umlenk-Satelliten ausgeführte Entnahmeeinrichtung 12 verfährt zur nächsten Speicherlinie 5a-h.

Bei dieser Bewegung folgt vorzugsweise die als Umlenk-Satellit ausgeführte Entnahmeeinrichtung 12 der Förderrichtung der zweiten Fördereinrichtung 11 (Förderrichtung des Auslaufförderers), so dass bei dieser Bewegung ein Abstand zwischen den Verpackungen 6 in der Entnahmeeinrichtung 12 und auf der zweiten Fördereinrichtung 12 beibehalten wird.

Wenn hingegen die als Umlenk-Satellit ausgeführte Entnahmeeinrichtung 12 entgegen der Förderrichtung der zweiten Fördereinrichtung 12 transportiert wird, würde zwischen der letzten (stromabwärtigen) Verpackung 6 auf der Entnahmeeinrichtung 12 und der ersten (stromaufwärtigen) Verpackung 6 auf der zweiten Fördereinrichtung 12 eine kleine Lücke entstehen.

Sobald die als Umlenk-Satellit ausgeführte Entnahmeeinrichtung 12 die nächste Speicherlinie 5a-h des Speichertisches 2 erreicht hat, wird gleichzeitig die der Entnahmeeinrichtung 12 zugeordnete Transportvorrichtung und die dieser Speicherlinie 5a-h zugeordnete Transportvorrichtung gestartet, so dass sich die auf der Entnahmeeinrichtung 12 vorgesehenen Verpackungen 6 und die in der (zweiten) Speicherlinie 5a-h befindlichen Verpackungen 6 gleichzeitig bewegen. Hierdurch entstehen keinerlei Lücken zwischen den Verpackungen 6 in der letztendlich der zweiten Fördereinrichtung 11 zugeführten Verpackungsreihe. Die Erfindung ist nicht auf die in den Zeichnungen gezeigten Ausführungsformen beschränkt und ergibt sich aus den folgenden Ansprüchen.

### Bezugszeichenliste

- 1: Verpackungsanlage
- 2: Speichertisch
- 3: Einschleusung des Speichertisches
- 4: Ausschleusung des Speichertisches
- 5a-h: Speicherlinie
- 6: Verpackung
- 7: Sensorik
- 8: erste Verpackungseinrichtung
- 9: zweite Verpackungseinrichtung
- 10: erste Fördereinrichtung
- 11: zweite Fördereinrichtung
- 12: Entnahmeeinrichtung
- 13: festgelegter Förderbereich auf der Speicherlinie

## Patentansprüche

1. Speichertisch (2) für eine Verpackungsanlage (1), wobei der Speichertisch (2) Folgendes aufweist:
- mindestens eine Einschleusung (3);
- mindestens eine Ausschleusung (4); und
- mindestens zwei separat voneinander mit Verpackungen (6) bestückbare und zwischen der mindestens einen Einschleusung (3) und der mindestens einen Ausschleusung (4) angeordnete Speicherlinien (5a-h), wobei zum Transport der jeweiligen Verpackungen (6) den mindestens zwei Speicherlinien (5a-h) jeweils eine Transportvorrichtung zugeordnet ist,
wobei in einem stromabwärtigen bzw. ausschleusseitigen Endbereich der mindestens zwei Speicherlinien (5a-h) mindestens eine berührungslos arbeitende und insbesondere optische Sensorik (7) vorgesehen ist zum Erfassen einer An- oder Abwesenheit einer Verpackung (6) jeweils im stromabwärtigen bzw. ausschleusseitigen Endbereich der jeweiligen Speicherlinien (5a-h), wobei ferner eine Steuereinrichtung zum Ansteuern der den mindestens Speicherlinien (5a-h) jeweils zugeordneten Transportvorrichtungen vorgesehen ist, wobei die Steuereinrichtung ausgebildet ist, in Abhängigkeit eines Erfassungsergebnisses der mindestens einen Sensorik (7) die den Speicherlinien (5a-h) jeweils zugeordneten Transportvorrichtungen anzusteuern, wobei die mindestens eine Ausschleusung (4) eine Entnahmeeinrichtung (12) aufweist, welche ausgebildet ist, bedarfsweise von einer der mindestens zwei Speicherlinien (5a-h) Verpackungen (6) abzunehmen und diese Verpackungen (6) einem Transportband (11) und insbesondere einem Transportband eines Auslaufförderers zuzuführen, wobei hierzu der Entnahmeeinrichtung (12) vorzugsweise eine Transportvorrichtung zugeordnet ist,
wobei die Steuereinrichtung ausgebildet ist, beim Einschleusen von Verpackungen (6) in eine der mindestens zwei Speicherlinien (5a-h) die dieser Speicherlinie (5a-h) zugeordnete Transportvorrichtung derart anzusteuern, dass mit der Transportvorrichtung die in die Speicherlinie (5a-h) eingeschleusten Verpackungen (6) so lange bzw. so weit transportiert werden, bis die erste in die Speicherlinie (5a-h) eingeschleuste Verpackung (6) einen vorab festgelegten oder festlegbaren Bereich (13) in dem stromabwärtigen bzw. ausschleusseitigen Endbereich der Speicherlinie (5a-h) erreicht hat,
**dadurch gekennzeichnet, dass** die Entnahmeeinrichtung (12) als linear betriebener Satellit gebildet ist, der quer und vorzugsweise senkrecht zu den Speicherlinien (5a-h) bewegbar ist, oder wobei die Entnahmeeinrichtung (12) als schwenkbar betriebenes Band gebildet ist, das ausgehend von jeweils einem Transportband zwischen den Speicherlinien (5a-h) des Speichertisches (2) verschwenkbar ist, und
wobei die Entnahmeeinrichtung (12) derart ausgebildet und/oder der vorab festgelegte oder festlegbare Bereich (13), bis zu welchem die erste in die Speicherlinie (5a-h) eingeschleuste Verpackung (6) mit Hilfe der der Speicherlinie (5a-h) zugeordneten Transportvorrichtung transportiert wird, derart gewählt bzw. auswählbar sind/ist, dass die erste Verpackung (6) in der mindestens einen Ausschleusung (4) von der Entnahmeeinrichtung (12) so abnehmbar ist, dass ein insbesondere maximaler Abstand zwischen der mit Hilfe der Entnahmeeinrichtung (12) von der Speicherlinie (5a-h) abgenommenen ersten Verpackung (6) und einer zuvor mit Hilfe der Entnahmeeinrichtung (12) von einer anderen Speicherlinie (5a-h) abgenommenen Verpackung (6) einstellbar ist und vorzugsweise maximal 10 cm und noch bevorzugter maximal 5 cm beträgt.

2. Speichertisch (2) nach Anspruch 1,
wobei die mindestens eine Sensorik (7) eine Kamera, eine quer und insbesondere senkrecht zu den Speicherlinien (5a-h) angeordnete Kamerazeile, eine Fotozelle, eine Fotodiode, einen mit elektromagnetischen Wellen oder Ultraschall arbeitenden Präsenzmeldesensor und/oder mindestens einen Tiefensensor insbesondere in Gestalt einer TOF-Kamera, in Gestalt einer PMD-Kamera oder in Gestalt eines PMD-Sensors aufweist.

3. Speichertisch (2) nach Anspruch 1 oder 2,
wobei die mindestens eine Einschleusung (3) eine Bestückungseinrichtung vorzugsweise mit einer der Bestückungseinrichtung zugeordneten Transportvorrichtung aufweist, wobei die Bestückungseinrichtung ausgebildet ist, bedarfsweise jeweils einer der mindestens zwei Speicherlinien (5a-h) Verpackungen (6) zuzuführen.

4. Speichertisch (2) nach einem der Ansprüche 1 bis 3,
wobei die Bestückungseinrichtung ausgebildet ist, nach Erreichen eines definierten Füllgrads einer der Speicherlinien (5a-h) und/oder beim Erfassen einer Verpackung (6) am stromabwärtigen Endbereich der Speicherlinie (5a-h) eine nächste der Speicherlinien (5a-h) zu bestücken.

5. Speichertisch (2) nach einem der Ansprüche 1 bis 4,
wobei die mindestens eine Ausschleusung (4) am stromabwärtigen Endbereich der mindestens zwei Speicherlinien (5a-h) und die mindestens eine Einschleusung (3) am gegenüberliegenden Endbereich der mindestens zwei Speicherlinien (5a-h) angeordnet ist.

6. Speichertisch (2) nach einem der Ansprüche 1 bis 5,
wobei die den Speicherlinien (5a-h) jeweils zugeordneten Transportvorrichtungen jeweils insbesondere Transportbänder oder Transportgurte aufweisen.

7. Verpackungsanlage (1) mit einem Speichertisch (2) nach einem der Ansprüche 1 bis 6 und mit einer ersten und optional mit einer zweiten Verpackungseinrichtung (8, 9), wobei die erste Verpackungseinrichtung (8) ausgebildet ist, einer ersten Fördereinrichtung (10) Verpackungen (6) zuzuführen, wobei die Einschleusung (3) des Speichertisches (2) ausgebildet ist, die Verpackungen (6) von der ersten Fördereinrichtung (10) mindestens einer Speicherlinie (5a-h) des Speichertisches (2) zuzuführen, wobei die Ausschleusung (4) des Speichertisches (2) ausgebildet ist, die Verpackungen (6) von der mindestens einen Speicherlinie (5a-h) zu entnehmen und einer zweiten Fördereinrichtung (11) zuzuführen, wobei die zweite Fördereinrichtung (11) ausgebildet ist, die von der mindestens einen Speicherlinie (5a-h) entnommenen Verpackungen (6) der optional vorgesehenen zweiten Verpackungseinrichtung (9) zuzuführen, wobei die in dem stromabwärtigen bzw. ausschleusseitigen Endbereich der mindestens einen Speicherlinie (5a-h) vorgesehene Sensorik (7) ausgebildet ist, über die Steuereinrichtung die der mindestens einen Speicherlinie (5a-h) zugeordnete Transportvorrichtung derart anzusteuern, dass mit Hilfe der der mindestens einen Speicherlinie (5a-h) zugeordneten Transportvorrichtung die der mindestens einen Speicherlinie (5a-h) zugeführten Verpackungen (6) so weit bis zum stromabwärtigen bzw. ausschleusseitigen Endbereich der mindestens einen Speicherlinie (5a-h) zu transportieren, dass beim Entnehmen der Verpackungen (6) von der mindestens einen Speicherlinie (5a-h) keine Lücke zwischen der ersten von der mindestens einen Speicherlinie (5a-h) entnommenen Verpackung (6) und einer zuvor mit Hilfe der Ausschleusung (4) von einer anderen Speicherlinie (5a-h) des Speichertisches (2) entnommenen und unmittelbar stromabwärts der ersten von der mindestens einen Speicherlinie (5a-h) entnommenen Verpackung (6) benachbarten Verpackung (6) vorliegt.

8. Verfahren zum Betreiben eines Speichertisches (2) nach einem der Ansprüche 1 bis 6, wobei mit Hilfe einer Einschleusung (3) mindestens eine Speicherlinie (5a-h) des Speichertisches (2) derart mit Verpackungen (6) bestückt wird, dass mit Hilfe einer der mindestens einen Speicherlinie (5a-h) zugeordneten Transportvorrichtung eine erste, stromabwärtige Verpackung (6) bis zu einem vorab festgelegten oder festlegbaren Bereich (13) am stromabwärtigen Ende der mindestens einen Speicherlinie (5a-h) transportiert wird.

9. Verfahren nach Anspruch 8,
wobei der Transport der Verpackungen (6) in der mindestens einen Speicherlinie (5a-h) mit Hilfe einer am stromabwärtigen Endbereich der Speicherlinie (5a-h) vorgesehenen, berührungslos arbeitenden Sensorik (7) gesteuert wird.

## Claims

1. A buffer table (2) for a packaging installation (1), wherein the buffer table (2) comprises the following:
- at least one infeed (3);
- at least one outfeed (4); and
- at least two buffer lines (5a-h), which are arranged between the at least one infeed (3) and the at least one outfeed (4) and can be loaded with packages (6) separately from one another, wherein a respective transport apparatus is associated with each of the at least two buffer lines (5a-h) for transporting the respective packages (6),
wherein, in a downstream or outfeed-side end region of the at least two buffer lines (5a-h), at least one noncontacting and in particular optical sensor (7) is provided for detecting the respective presence or absence of a package (6) in the downstream or outfeed-side end region of the respective buffer lines (5a-h), wherein a control device is further provided for triggering the transport apparatuses respectively associated with the at least two buffer lines (5a-h), wherein the control device is configured so as to trigger the transport apparatuses respectively associated with the buffer lines (5a-h) as a function of a detection result of the at least one sensor (7), wherein the at least one outfeed (4) comprises an extraction device (12), which is configured so as to extract packages (6) as needed from one of the at least two buffer lines (5a-h) and supply these packages (6) to a conveyor belt (11), in particular to a conveyor belt of an outlet conveyor, wherein a transport apparatus is preferably associated with the extraction device (12) for this purpose,
wherein, when feeding packages (6) into one of the at least two buffer lines (5a-h), the control device is configured so as to trigger the transport apparatus associated with the buffer line (5a-h) in question such that, with the transport apparatus, the packages (6) fed into the buffer line (5a-h) are transported as long and as far until the first package (6) fed into the buffer line (5a-h) has reached a predefined or definable region (13) in the downstream or outfeed-side end region of the buffer line (5a-h),
**characterized in that**
the extraction device (12) is formed as a linearly operated satellite, which is movable transversely and preferably perpendicularly to the buffer lines (5a-h), or wherein the extraction device (12) is formed as a pivotably operated belt, which is pivotable starting from a respective conveyor belt between the buffer lines (5a-h) of the buffer table (2), and
wherein the extraction device (12) is configured and/or the predefined or definable region (13) up to which the first package (6) fed into the buffer line (5a-h) is transported with the aid of the transport apparatus associated with the buffer line (5a-h) is/are or can be selected such that the first package (6) in the at least one outfeed (4) can be removed from the extraction device (12) such that an in particular maximum distance between the first package (6) removed from the buffer line (5a-h) with the aid of the extraction device (12) and a package (6) removed from a different buffer line (5a-h) beforehand with the aid of the extraction device (12) is adjustable and is preferably a maximum of 10 cm and even more preferably a maximum of 5 cm.

2. The buffer table (2) according to claim 1,
wherein the at least one sensor (7) comprises a camera, a camera row arranged transversely and in particular perpendicularly to the buffer lines (5a-h), a photo cell, a photodiode, a presence detection sensor operating with electromagnetic waves or ultrasound, and/or at least one depth sensor, in particular in the form of a TOF camera, in the form of a PMD camera, or in the form of a PMD sensor.

3. The buffer table (2) according to claim 1 or 2,
wherein the at least one infeed (3) comprises a loading device, preferably having a transport apparatus associated with the loading device, wherein the loading device is configured so as to supply packages (6) as needed to one of the at least two buffer lines (5a-h).

4. The buffer table (2) according to any one of claims 1 to 3, wherein, upon reaching a defined fill level of one of the buffer lines (5a-h) and/or upon detecting a package (6) at the downstream end region of the buffer line (5a-h), the loading device is configured so as to load a next one of the buffer lines (5a-h).

5. The buffer table (2) according to any one of claims 1 to 4, wherein the at least one outfeed (4) is arranged at the downstream end region of the at least two buffer lines (5ah) and the at least one infeed (3) is arranged at the opposite end region of the at least two buffer lines (5ah) .

6. The buffer table (2) according to any one of claims 1 to 5,
wherein the respective transport apparatuses associated with the buffer lines (5a-h) comprise respective transport belts or conveyor belts, in particular.

7. A packaging system (1) having a buffer table (2) according to any one of claims 1 to 6 and having a first and optionally a second packaging device (8, 9), wherein the first packaging device (8) is configured so as to supply packages (6) to a first conveyor device (10), wherein the infeed (3) of the buffer table (2) is configured so as to supply the packages (6) from the first conveyor device (10) to at least one buffer line (5a-h) of the buffer table (2), wherein the outfeed (4) of the buffer table (2) is configured so as to extract the packages (6) from the at least one buffer line (5a-h) and supply them to a second conveyor device (11), wherein the second conveyor device (11) is configured so as to supply the packages (6) extracted from the at least one buffer line (5a-h) to the optionally provided second packaging device (9), wherein the sensor (7) provided in the downstream or outfeed-side end region of the at least one buffer line (5a-h) is configured so as to trigger the transport apparatus associated with the at least one buffer line (5a-h) via the control device in such a way that, with the aid of the transport apparatus associated with the at least one buffer line (5a-h), the packages (6) supplied to the at least one buffer line (5a-h) are transported up to the downstream or outfeed-side end region of the at least one buffer line (5a-h) such that, when the packages (6) are extracted from the at least one buffer line (5a-h), there is no gap between the first package (6) extracted from the at least one buffer line (5a-h) and a package (6) extracted from a different buffer line (5a-h) of the buffer table (2) beforehand with the aid of the outfeed (4) and lying immediately downstream of the first package (6) extracted from the at least one buffer line (5a-h).

8. A method for operating a buffer table (2) according to any one of claims 1 to 6, wherein, with the aid of an infeed (3), at least one buffer line (5a-h) of the buffer table (2) is loaded with packages (6) in such a way that, with the aid of a transport apparatus associated with the at least one buffer line (5a-h), a first downstream package (6) is transported up to a predefined or definable region (13) at the downstream end of the at least one buffer line (5a-h).

9. The method according to claim 8,
wherein the conveyance of the packages (6) in the at least one buffer line (5a-h) is controlled with the aid of a noncontacting sensor (7) provided at the downstream end region of the buffer line (5a-h).

## Revendications

1. Table tampon (2) pour une installation d'emballage (1), dans laquelle la table tampon (2) comprend ce qui suit :
- au moins une entrée d'alimentation (3) ;
- au moins une sortie d'évacuation (4) ; et
- au moins deux lignes tampon (5a-h), qui sont agencées entre l'au moins une entrée d'alimentation (3) et l'au moins une sortie d'évacuation (4) et peuvent être chargées avec des emballages (6) séparément l'une de l'autre, dans laquelle un appareil de transport respectif est associé à chacune parmi les au moins deux lignes tampon (5a-h) pour le transport des emballages respectifs (6),
dans laquelle, dans une zone d'extrémité côté aval ou côté sortie d'évacuation des au moins deux lignes tampon (5a-h), au moins un capteur sans contact et en particulier optique (7) est fourni pour la détection de la présence ou de l'absence respective d'un emballage (6) dans la zone d'extrémité côté aval ou côté sortie d'évacuation des lignes tampon respectives (5a-h), dans laquelle un dispositif de commande est en outre fourni pour le déclenchement des appareils de transport respectivement associés avec les au moins deux lignes tampon (5a-h), dans laquelle le dispositif de commande est configuré de manière à déclencher les appareils de transport respectivement associés avec les lignes tampon (5a-h) en fonction d'un résultat de détection de l'au moins un capteur (7), dans laquelle l'au moins une sortie d'évacuation (4) comprend un dispositif d'extraction (12), qui est configuré de manière à extraire des emballages (6) selon les besoins de l'une parmi les au moins deux lignes tampon (5a-h) et fournir ces emballages (6) à une bande transporteuse (11), en particulier à une bande transporteuse d'un convoyeur de sortie, dans laquelle un appareil de transport est de préférence associé au dispositif d'extraction (12) à cet effet,
dans laquelle, lors de l'alimentation d'emballages (6) dans une parmi les au moins deux lignes tampon (5a-h), le dispositif de commande est configuré de manière à déclencher l'appareil de transport associé avec la ligne tampon (5a-h) en question de sorte que, avec l'appareil de transport, les emballages (6) introduits dans la ligne tampon (5a-h) sont transportés aussi longtemps et aussi loin jusqu'à ce que le premier emballage (6) introduit dans la ligne tampon (5a-h) ait atteint une zone prédéfinie ou définissable (13) dans la zone d'extrémité côté aval ou côté sortie d'évacuation de la ligne tampon (5a-h),
**caractérisé en ce que**
le dispositif d'extraction (12) est formé en tant que satellite actionné de manière linéaire, qui est mobile transversalement et de préférence perpendiculairement aux lignes tampon (5a-h), ou dans laquelle le dispositif d'extraction (12) est formé en tant que courroie actionnée de manière pivotante, qui peut pivoter à partir d'une courroie de convoyeur respective entre les lignes tampon (5a-h) de la table tampon (2), et
dans laquelle le dispositif d'extraction (12) est configuré et/ou la zone prédéfinie ou définissable (13) jusqu'à laquelle le premier emballage (6) introduit dans la ligne tampon (5a-h) est transporté à l'aide du dispositif de transport associé avec la ligne tampon (5a-h) est/sont ou peut être sélectionné de sorte que le premier emballage (6) dans l'au moins une sortie d'évacuation (4) puisse être retiré du dispositif d'extraction (12) de sorte qu'une distance notamment maximale entre le premier emballage (6) retiré de la ligne tampon (5-h) à l'aide du dispositif d'extraction (12) et un emballage (6) préalablement retiré d'une autre ligne tampon (5a-h) à l'aide du dispositif d'extraction (12) est réglable et a de préférence un maximum de 10 cm et encore plus préférablement un maximum de 5 cm.

2. Table tampon (2) selon la revendication 1,
dans laquelle l'au moins un capteur (7) comprend une caméra, une rangée de caméras agencée transversalement et en particulier perpendiculairement aux lignes tampon (5ah), une cellule photoélectrique, une photodiode, un capteur de détection de présence fonctionnant avec des ondes électromagnétiques ou des ultrasons, et/ou au moins un capteur de profondeur, en particulier sous la forme d'une caméra TOF, sous la forme d'une caméra PMD, ou sous la forme d'un capteur PMD.

3. Table tampon (2) selon la revendication 1 ou 2,
dans laquelle l'au moins une entrée d'alimentation (3) comprend un dispositif de chargement, ayant de préférence un appareil de transport associé avec le dispositif de chargement, dans laquelle le dispositif de chargement est configuré de manière à fournir des emballages (6) selon les besoins à l'une parmi les au moins deux lignes tampon (5ah) .

4. Table tampon (2) selon l'une quelconque des revendications 1 à 3,
dans laquelle, lors de l'atteinte d'un niveau de remplissage défini de l'une parmi les lignes tampon (5a-h) et/ou lors de la détection d'un emballage (6) sur la zone d'extrémité aval de la ligne tampon (5a-h), le dispositif de chargement est configuré de manière à charger une suivante parmi les lignes tampon (5a-h).

5. Table tampon (2) selon l'une quelconque des revendications 1 à 4,
dans laquelle l'au moins une sortie d'évacuation (4) est agencée sur la zone d'extrémité aval des au moins deux lignes tampon (5a-h) et l'au moins une entrée d'alimentation (3) est agencée sur la zone d'extrémité opposée des au moins deux lignes tampon (5a-h).

6. Table tampon (2) selon l'une quelconque des revendications 1 à 5,
dans laquelle les appareils de transport respectifs associés aux lignes tampon (5a-h) comprennent des courroies de transport ou des courroies de transport respectives, en particulier.

7. Système d'emballage (1) ayant une table tampon (2) selon l'une quelconque des revendications 1 à 6 et ayant un premier et éventuellement un deuxième dispositif d'emballage (8, 9), dans lequel le premier dispositif d'emballage (8) est configuré de manière à fournir des emballages (6) à un premier dispositif convoyeur (10), dans lequel l'entrée d'alimentation (3) de la table tampon (2) est configurée de manière à fournir les emballages (6) à partir du premier dispositif convoyeur (10) à au moins une ligne tampon (5a-h) de la table tampon (2), dans lequel la sortie d'évacuation (4) de la table tampon (2) est configurée de manière à extraire les emballages (6) de l'au moins une ligne tampon (5a-h) et à les fournir à un deuxième dispositif convoyeur (11), dans lequel le deuxième dispositif de convoyeur (11) est configuré de manière à fournir les emballages (6) extraits de l'au moins une ligne tampon (5a-h) au deuxième dispositif d'emballage (9) éventuellement fourni, dans lequel le capteur (7) fourni dans la zone d'extrémité côté aval ou côté sortie d'évacuation de l'au moins une ligne tampon (5a-h) est configuré de manière à déclencher l'appareil de transport associé avec l'au moins une ligne tampon (5a-h) via le dispositif de commande de telle sorte que, à l'aide de l'appareil de transport associé à l'au moins une ligne tampon (5a-h), les emballages (6) fournis à l'au moins une ligne tampon (5a-h) sont transportés jusqu'à la zone d'extrémité côté aval ou côté sortie d'évacuation de l'au moins une ligne tampon (5a-h) de sorte que, lorsque les emballages (6) sont extraits de l'au moins une ligne tampon (5a-h), Il n'y a pas d'espace entre le premier emballage (6) extrait de l'au moins une ligne tampon (5a-h) et un emballage (6) extrait d'une ligne tampon différente (5a-h) de la table tampon (2) au préalable à l'aide de la sortie d'évacuation (4) et situé immédiatement en aval du premier emballage (6) extrait de la ou des lignes tampons (5a-h).

8. Procédé d'exploitation d'une table tampon (2) selon l'une quelconque des revendications 1 à 6, dans lequel, à l'aide d'une entrée d'alimentation (3), au moins une ligne tampon (5a-h) de la table tampon (2) est chargée d'emballages (6) de sorte que, à l'aide d'un dispositif de transport associé à l'au moins une ligne tampon (5a-h), un premier emballage (6) en aval est transporté jusqu'à une zone prédéfinie ou définissable (13) à l'extrémité aval de l'au moins une ligne tampon (5a-h).

9. Procédé selon la revendication 8,
dans lequel le transport des emballages (6) dans l'au moins une ligne tampon (5a-h) est commandé à l'aide d'un capteur sans contact (7) fourni sur la zone d'extrémité aval de la ligne tampon (5a-h).
